# EUROPÄISCHE PATENTSCHRIFT

(11) **EP 2 619 052 B1**
(45) Veröffentlichungstag und Bekanntmachung des Hinweises auf die Patenterteilung: **13.11.2019**
(21) Anmeldenummer: 11760775.4
(22) Anmeldetag: 22.09.2011
(51) Int. Cl.: B60T 7/12, B60T 13/74

(54) **HALTEFUNKTION FÜR EIN KRAFTFAHRZEUG**
RETAINING FUNCTION FOR A MOTOR VEHICLE
FONCTION D'IMMOBILISATION POUR UN VÉHICULE AUTOMOBILE

(30) Priorität: 23.09.2010 DE 102010041268
(43) Veröffentlichungstag der Anmeldung: 31.07.2013
(73) Patentinhaber: Continental Teves AG & Co. OHG, 60488 Frankfurt am Main (DE)
(72) Erfinder: TREPPENHAUER, Patrick, 65719 Hofheim (DE); MANN-WAHRENBERG, Alexander, 65474 Bischofsheim (DE); HARTMANSHENN, Erik, 63538 Großkrotzenburg (DE)
(86) Internationale Anmeldenummer: PCT/EP2011/066481
(87) Internationale Veröffentlichungsnummer: WO 2012/038498

(56) Entgegenhaltungen:
- WO-A1-2008/115132
- DE-A1-102005 042 282
- DE-A1-102007 030 780
- DE-A1-102009 004 023

## Beschreibung

Die Erfindung betrifft ein Verfahren gemäß Oberbegriff von Anspruch 1 und ein Bremssystem gemäß Oberbegriff von Anspruch 12.

Kraftfahrzeuge sind in der Regel mit einer hydraulischen Betriebsbremsanlage ausgerüstet, bei denen nach Maßgabe einer Bremspedalbetätigung durch den Fahrer in einem Hauptbremszylinder Druck aufgebaut wird und über mit einem hydraulischen Medium gefüllte Bremsleitungen an Radbremsen übertragen wird. Vielfach kann außerdem unabhängig von einer Bremspedalbetätigung ein autonomer Druckaufbau nach Anforderung durch ein elektronisches Steuergerät erfolgen. Über eine solche fahrerunabhängige Bremsbetätigung werden Fahrsicherheitsfunktionen, wie eine Fahrdynamikregelung (Electronic Stability Control, ESC), und vermehrt auch Assistenzfunktionen bereitgestellt, wie eine Haltefunktion des Fahrzeugs (Active Vehicle Hold, AVH). Diese Haltefunktion kann durch einen autonomen Druckaufbau und ein Einsperren von Bremsdruck in den Radbremsen das Fahrzeug an einer Steigung auch über eine längere Zeitdauer automatisch im Stillstand halten. Wenn das Fahrzeug mit einer elektrisch betätigbaren Feststellbremsanlage ausgestattet ist, erfolgt unter gewissen Bedingungen (z.B. wenn der Fahrer die Tür öffnet) eine Übergabe von der Betriebsbremsanlage an die Feststellbremsanlage.

Aus der DE 103 45 485 A1 ist eine Bremsvorrichtung mit Betriebs- und Feststellbremsfunktion bekannt, die eine hydraulische Druckerzeugungseinrichtung zur hydraulischen Zuspannung der Bremsvorrichtung, eine selbsthemmende, vorzugsweise elektrische Krafterzeugungseinrichtung zur zusätzlichen Zuspannung der Bremsvorrichtung, und ein Zuspannelement umfasst, an dem sowohl die hydraulische Druckerzeugungsvorrichtung als auch die zusätzliche Krafterzeugungsvorrichtung angreifen. Im Fall einer Betätigung der Feststellbremsfunktion wird die zusätzliche Zuspannung nach der hydraulischen Zuspannung wirksam. Das Niveau der Zuspannkraft der zusätzlichen Zuspannung ist größer als das Niveau der Zuspannkraft der hydraulischen Zuspannung. Eine elektrische Feststellbremse, die gemeinsam mit einer hydraulischen Betriebsbremse auf eine mit Reibbelag versehene Zuspannvorrichtung einwirkt, ist unter dem Namen integrierte Parkbremse (IPB) bekannt.

Die EP 1 678 018 B1 offenbart ein Verfahren zum Stabilisieren eines in Stillstand abgebremsten Kraftfahrzeugs, das mit einem fahrerunabhängig betätigbaren Bremssystem ausgerüstet ist, welches eine Betriebsbremse und eine Feststellbremse umfasst. Nach Erreichen des Fahrzeugstillstands wird eine von der Feststellbremse zu erzeugende, den Fahrzeugstillstand aufrecht erhaltende Feststellbremskraft bestimmt, und mit der Betriebsbremse fahrerunabhängig eine die Feststellbremse simulierende Betriebs-Bremskraft erzeugt, woraufhin die vorher bestimmte Feststell-Bremskraft mit der Feststellbremse aufgebaut wird und bei oder nach Erreichen der Feststell-Bremskraft in der Feststellbremse die Betriebsbremse deaktiviert wird. Dieses Verfahren soll ein Wegrollen des Fahrzeugs verhindern, welches bei teilweise vereister Fahrbahn dadurch auftreten kann, dass die Feststellbremse z.B. nur an den Hinterrädern vorhanden ist, während die Betriebsbremse auf alle Räder des Fahrzeugs wirkt.

Aus der DE 10 2007 030 780 A1 ist ein Verfahren zur fahrbahnspezifischen Feststellbremsung eines Fahrzeugs bekannt, bei dem zum Bremsen der Räder des Fahrzeugs zumindest ein eine Feststellbremsfunktion und eine Betriebsbremsfunktion aufweisendes elektromechanisches Bremssystem vorgesehen ist, bei dem zum Abbremsen des Fahrzeugs in den Stillstand pro Rad eine Betriebsbremskraft erzeugt wird, wobei durch das zumindest eine elektromechanische Bremssystem an zumindest zwei Rädern des Fahrzeugs eine Feststellbremskraft erzeugbar ist. Bei einem stehenden Fahrzeug werden an zumindest zwei der Räder Betriebsbremskräfte mit einem der Summe der zuvor an allen Rädern anliegenden Betriebsbremskräfte entsprechenden Betrags erzeugt, wobei der Stillstand des Fahrzeugs überprüft wird und bei einem anhaltenden Stillstand des Fahrzeugs der Betrag der an zumindest zwei Rädern anliegenden Betriebsbremskräfte reduziert wird und gleichzeitig der betragsmäßigen Reduktion der Betriebsbremskräfte entsprechenden Feststellbremskräfte zumindest an den weiteren Rädern aufgebaut werden.

Die DE 10 2009 004 023 A1 offenbart ein Verfahren zum Steuern eines Start-Stop-Betriebs eines Fahrzeugs, welches einen Hybridantrieb mit Verbrennungsmotor und Elektromotor, eine Betriebsbremse mit ABS und eine elektrische Feststellbremse aufweist. Bei einer Bremsanforderung wird aufgrund ermittelter Betriebsparameter ein Generatorbetrieb des Elektromotors aktiviert. Dann wird die Betriebsbremse aktiviert und bei angehaltenem Fahrzeug erfolgt nach einer vorher festlegbaren Verzögerungszeit ein automatisches Feststellen der elektrischen Feststellbremse.

Vielfach sind Fahrzeuge an mindestens einem Rad, insbesondere den Vorderrädern, nur mit einer hydraulischen Betriebsbremse und an mindestens einem Rad, insbesondere den Hinterrädern, mit einer integrierten Parkbremse ausgestattet. Findet bei einem derartig ausgestatteten Fahrzeug eine Übergabe von der hydraulischen Haltefunktion der Betriebsbremse an die elektrische Feststellbremse stattfindet, so kann es wegen einer Rückwirkung der Feststellbremse auf die hydraulische Bremse zu einem ungewollten langsamen Lösen der Bremsbeläge und einem Durchrutschen der Bremsscheibe kommen, wobei ein störendes Geräusch entsteht.

Es ist daher Aufgabe der vorliegenden Erfindung ein Verfahren zum Halten eines Fahrzeugs anzugeben, welches einen längerdauernden Stillstand des Fahrzeugs gewährleistet, ohne dass der Komfort des Fahrers durch störende Geräusche und/oder eine Bewegung des Fahrzeugs vermindert wird.

Diese Aufgabe wird durch das Verfahren gemäß Anspruch 1 und das Bremssystem gemäß Anspruch 12 gelöst.

Es wird also ein Verfahren bereitgestellt, bei dem ein Fahrzeug mit einer Betriebsbremse und einer Feststellbremse durch autonome Bremsbetätigung gehalten wird, wobei in einem ersten Schritt eine Betätigung der Betriebsbremse erfolgt und bei Erfüllung einer vorgegebenen Bedingung eine Übergabe von der Betriebsbremse an die Feststellbremse stattfindet. Erfindungsgemäß erfolgt während der Übergabe sowohl eine Betätigung der Feststellbremse als auch eine zusätzliche Betätigung der Betriebsbremse.

Unter einer autonomen Betätigung einer Bremse wird hierbei verstanden, dass der Aufbau von Bremskraft durch ein Steuergerät bzw. eine Assistenz- oder Fahrsicherheitsfunktion angefordert wird, wobei eine Betätigung des Bremspedals durch den Fahrer nicht erforderlich ist. Mit Übergabe von der Betriebsbremse an die Feststellbremse ist ein Prozess gemeint, vor dessen Durchführung eine Bremskraft mit der Betriebsbremse aufgebaut wurde, während dem eine Betätigung von Betriebsbremse und/oder Feststellbremse erfolgt, und nach dem eine Bremskraft mit der Feststellbremse aufgebaut wird. Hierbei bedeutet während der Übergabe, dass im Verlauf der Übergabe zumindest zeitweise das genannte Merkmal zutrifft.

Dadurch, dass während der Übergabe sowohl eine Betätigung der Feststellbremse als auch eine zusätzliche Betätigung der Betriebsbremse erfolgt, wird eine Rückwirkung von der Feststellbremse auf die Betriebsbremse vermieden. Somit steht immer eine hinreichende Bremskraft bereit, um alle Räder des Fahrzeugs sicher im Stillstand zu halten, ohne dass ein "Setzen" des Fahrzeugs oder ein störendes Geräusch auftreten. Der Fahrer kann die Haltefunktion daher komfortabel für eine beliebig lange Zeit aktiviert lassen.

Es ist vorteilhaft, wenn die zusätzliche Betätigung der Betriebsbremse, insbesondere ein weiterer autonomer Druckaufbau, zumindest teilweise gleichzeitig mit der Betätigung der Feststellbremse erfolgt. Die gleichzeitige Betätigung von Betriebsbremse und Feststellbremse ist besonders dazu geeignet, schnell erfolgende Bremskraftschwankungen zu kompensieren.

Bevorzugt hat die Dauer und Intensität der zusätzlichen Betätigung der Betriebsbremse einen vorgegebenen zeitlichen Verlauf, der insbesondere gemäß einer mathematischen Funktion oder einer vorgegebenen Wertetabelle eingestellt wird. Die benötigte zusätzliche Bremskraft kann anhand der konstruktiven Auslegung des Bremssystems oder mit Hilfe von Messungen an einem Testfahrzeug vorab bestimmt werden. Somit lässt sich ein optimaler Verlauf der Bremsbetätigung wählen, um die Haltefunktion komfortabel zu gewährleisten. Dieser Verlauf kann das Steuergerät anhand vorgegebener mathematischer Funktionen mit geeignet gewählten Parametern oder - mit erhöhtem Speicherplatzbedarf, aber noch flexibler - anhand einer vorgegebenen Wertetabelle (vorzugsweise im Steuergerät gespeichert) durch entsprechende Ansteuerung der Betriebsbremse einstellen.

Besonders bevorzugt umfasst die zusätzliche Betätigung der Betriebsbremse mindestens einen Zeitraum, in dem die Bremskraft mit einer konstanten Rate zunimmt. Diese konstante Zunahme der Bremskraft lässt sich z.B. in einem hydraulischen Bremssystem durch einen Betrieb einer Hydraulikpumpe mit konstanter Drehzahl bzw. konstantem Volumenstrom einstellen. Bei geringem Aufwand kann dadurch schon ein gewünschter Betätigungsverlauf der Betriebsbremse zumindest angenähert werden.

Ganz besonders bevorzugt erfolgt die zusätzliche Betätigung der Betriebsbremse derartig, dass in einem ersten Zeitraum die Bremskraft mit einer ersten Rate zunimmt und in einem zweiten Zeitraum die Bremskraft mit einer zweiten Rate zunimmt. Somit kann bei immer noch geringem Aufwand eine verbesserte - und in vielen Fällen ausreichende - Näherung an den optimalen Betätigungsverlauf eingestellt werden.

Insbesondere wird mindestens eine Rate in Abhängigkeit von der Betätigungsgeschwindigkeit der Feststellbremse und/oder der vor der Übergabe anliegenden Bremskraft gewählt. Diese Parameter beeinflussen den optimalen Betätigungsverlauf hinsichtlich Änderungsrate und/oder Intensität der Betätigung und lassen sich leicht bestimmen (z.B. anhand der Konstruktion der Feststellbremse und der an den Motor angelegten Spannung bzw. über eine Messung des hydraulischen Drucks der Betriebsbremse).

Zweckmäßigerweise wird die zusätzliche Betätigung der Bremskraft so vorgenommen, dass die Gesamtbremskraft während der Übergabe von der Betriebsbremse an die Feststellbremse im Rahmen einer vorgegebenen Genauigkeit konstant gehalten wird. Dies kann durch eine Steuerung der zusätzlichen Betätigung der Betriebsbremse gemäß einem vorgegebenen Verlauf oder bei Vorhandensein geeigneter Sensoren durch eine Regelung realisiert werden. Dadurch dass die Gesamtbremskraft praktisch konstant gehalten wird, ist ein sicheres Halten des Fahrzeugs ohne Störgeräusche gewährleistet.

Gemäß einer bevorzugten Ausführungsform der Erfindung erfolgt während der Übergabe von der Betriebsbremse an die Feststellbremse eine Überprüfung, ob sich das Fahrzeug und/oder eines oder mehrere oder alle Räder weiterhin im Stillstand befinden. Dies erhöht die Zuverlässigkeit der Haltefunktion.

Gemäß einer besonders bevorzugten Ausführungsform der Erfindung findet die Überprüfung des Stillstands mit Hilfe mindestens eines Raddrehzahlsensors statt, insbesondere an einem nur von der Betriebsbremse gebremsten Rad, wobei insbesondere die zusätzliche Betätigung der Betriebsbremse dann erfolgt, wenn mindestens eine Signalflanke eines Raddrehzahlsensors erkannt wird und unterbleibt, wenn keine Signalflanke eines Raddrehzahlsensors erkannt wird. Raddrehzahlsensoren sind in nahezu allen modernen Fahrzeugen enthalten, und liefern im Verlauf einer Umdrehung des Rades eine Vielzahl impulsförmiger Signale, deren Signalflanken mit schnellen elektronischen Schaltungen geringer Komplexität erkannt werden können. Indem die zusätzliche Betätigung der Betriebsbremse nur dann erfolgt, wenn die Druckabnahme wirklich zu einem "Setzen" des Fahrzeugs führt (was anhand einer einzigen Signalflanke erkannt werden kann) wird der Komfort weiter erhöht und der Energieverbrauch verringert.

Bevorzugt erfolgt nach der Übergabe von der Betriebsbremse an die Parkbremse eine Überprüfung, ob sich das Fahrzeug weiterhin im Stillstand befindet. Besonders bevorzugt findet eine Überprüfung des Stillstands des Fahrzeugs mit Hilfe mindestens eines Raddrehzahlsensors und/oder mindestens eines Beschleunigungssensors und/oder mindestens eines Gierratensensors statt. Somit könnte auch erkannt werden, wenn z.B. ein Hinterrad auf Eis oder Matsch rutscht.

Es ist vorteilhaft, wenn die vorgegebene Bedingung für die Übergabe von der Betätigung der Betriebsbremse an die Betätigung der Feststellbremse erfüllt ist, sobald eine Deaktivierung der Motorzündung und/oder ein Lösen mindestens eines Sicherheitsgurtes und/oder ein Öffnen mindestens einer Tür und/oder ein Ablaufen eines vorgegebenen Zeitraums erkannt wird. Wenn davon auszugehen ist, dass die Weiterfahrt sich verzögert, ist die Übergabe an die elektrische Feststellbremse sinnvoll.

Zweckmäßigerweise wird die Bremskraft der Betriebsbremse und/oder der Feststellbremse in Abhängigkeit von einer Fahrzeugneigung und/oder einem Beladungszustand gewählt. Indem der hydraulische Druck der Haltefunktion nur so hoch gewählt wird, wie in der aktuellen Situation benötigt, kann auch das Lösen bei der Weiterfahrt schneller erfolgen.

Die Erfindung betrifft weiterhin ein Bremssystem für ein Fahrzeug mit einer Betriebsbremse, welche eine fahrerunabhängige Bremsbetätigung erlaubt, und einer elektrisch ansteuerbaren Feststellbremse, welches ein Steuergerät zur Durchführung eines Verfahrens nach mindestens einem der vorhergehenden Ansprüche aufweist.

Vorzugsweise wirken Feststellbremse und Betriebsbremse an mindestens einem Rad des Fahrzeugs auf dasselbe oder dieselben einem Rad zugeordnete Zuspannelemente von Radbremsen. Die Radbremsen können beispielsweise als Scheibenbremsen ausgebildet sein, bei denen ein an dem Fahrzeug befestigtes Zuspannelement (der Radbremszylinder bzw. der Bremsbelag) auf eine mit dem Rad verbundene Bremsscheibe wirkt.

Bevorzugt besitzt die Betriebsbremse mindestens einen hydraulischen Bremskreis, welcher hydraulisch betätigte Reibbremsen an mindestens zwei Rädern des Fahrzeugs umfasst und bei dem mindestens ein Rad des Fahrzeugs nur von der Betriebsbremse gebremst werden kann.

Besonders bevorzugt erfolgt während der Übergabe von der Betriebsbremse an die Feststellbremse ein autonomer Druckaufbau in mindestens einem hydraulischen Bremskreis der Betriebsbremse, der insbesondere so gesteuert und/oder geregelt wird, dass der Druck in dem mindestens einen hydraulischen Bremskreis im Rahmen einer vorgegebenen Genauigkeit konstant gehalten wird. Dadurch, dass der wegen einer Rückwirkung der Feststellbremse auf die Betriebsbremse auftretende Druckabfall in dem Bremskreis mit Hilfe einer zeitgleichen Ansteuerung z.B. einer Hydraulikpumpe kompensiert wird, ergibt sich ein gesteigerter Komfort der Haltefunktion.

Weitere bevorzugte Ausführungsformen ergeben sich aus den Unteransprüchen und der nachfolgenden Beschreibung eines Ausführungsbeispiels an Hand von Figuren.

Es zeigen:
- Fig. 1: ein schematische Darstellung eines Bremssystems, und
- Fig. 2: ein Diagramm zum zeitlichen Verlauf des Bremsdrucks der hydraulischen Bremsanlage.

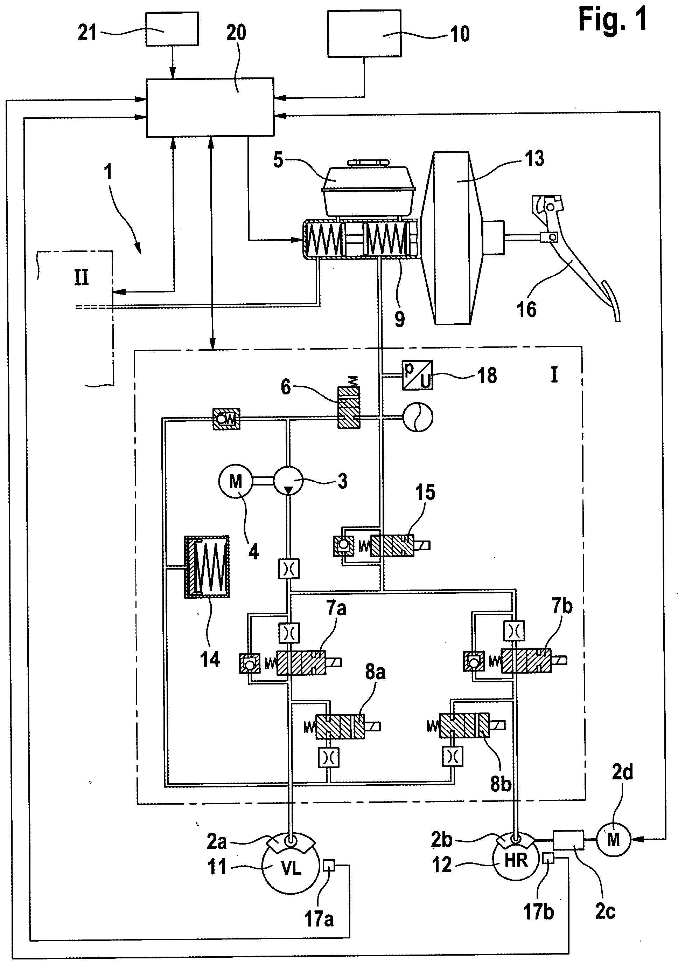

Figur 1 zeigt ein Bremssystem 1 eines Kraftfahrzeugs mit einem Steuergerät 20, dem Sensordaten einer ESC-Sensorik 21, die zumindest Gierratensensor und Querbeschleunigungssensor umfasst, impulsförmige Signale von Raddrehzahlsensoren 17a, 17b und Zustandssignale eines Schalters 10 zugeführt werden. Das Steuergerät stellt eine Fahrdynamikregelung und eine oder mehrere weitere Funktionen bereit, wobei eine Haltefunktion über Schalter 10 durch den Fahrer des Kraftfahrzeugs aktiviert oder deaktiviert werden kann.

Das Steuergerät 20 steuert ein Bremssystem 1, welches zwei hydraulische Bremskreise einer Betriebsbremse umfasst, wobei die Figur 1 nur einen an einen Bremszylinder (Tandem-Hauptbremszylinder) 9 angeschlossenen Bremskreis I für ein vorderes linkes Rad 11 und ein hinteres rechtes Rad 12 zeigt; ein zweiter Bremskreis II ist entsprechend aufgebaut, ebenfalls an den Bremszylinder 9 angeschlossen und nur andeutungsweise dargestellt. An den Bremskreis I sind Radbremsen der Räder 11 und 12 mit je einem Bremssattel 2a und 2b über jeweils eine Hydraulikleitung angeschlossen, wobei die hinteren Räder 12 mit einer integrierten Parkbremse ausgestattet sind, die eine Feststellbremse mit einem Bremsaktuator 2c umfasst, der von Gleichstrommotor 2d unabhängig von einer hydraulischen Druckbeaufschlagung betätigt werden.

Auch die Feststellbremse ist mit Steuergerät 20 verbunden, welches Gleichstrommotor 2d ansteuert. Über ein Getriebe wird die Drehbewegung des Gleichstrommotors 2d in eine lineare Bewegung eines Bremskolbens des Bremsaktuators 2c umgesetzt, so dass das Drehmoment des Gleichstrommotors 2d als Zuspannkraft F über den Bremskolben auf den Bremssattel 2b wirkt. Nach dem Abschalten des Motorstromes I bleibt aufgrund einer Selbsthemmung des Getriebes die erzeugte Zuspannkraft F bestehen.

Die Zuspannkraft F selbst wird nicht gemessen. Beim Zuspannen der Parkbremse wird der Gleichstrommotor 2d in Richtung Zuspannen, das heißt beispielsweise durch das Steuergerät 20 mit einer positiven anliegenden Spannung, über eine H-Brückenschaltung angetrieben, bis ein vorgegebener, definierter Sollwert des Motorstroms erreicht bzw. überschritten wird. Dann ist die dem entsprechenden Stromwert zugeordnete Zuspannkraft erreicht und der Gleichstrommotor 2d wird abgeschaltet.

Das Bremssystem 1 weist einen mit dem Bremszylinder 9 verbundenen Bremskraftverstärker 13 und einen Vorratsbehälter 5 für die Bremsflüssigkeit bzw. die Hydraulikflüssigkeit auf. Der Bremszylinder 9 erzeugt auslassseitig einen Bremsdruck entsprechend eines mit dem Bremskraftverstärker 13 verbundenen Bremspedals 16, das von einem Fahrer betätigt wird. Dieser Bremsdruck wird über ein geöffnetes Trennventil 15 jeweils einem offenen Einlassventil 7a bzw. 7b einlassseitig zugeführt, damit sich ein entsprechender hydraulischer Bremsdruck an den Rädern 11 und 12 mittels der Bremssättel 2a und 2b aufbauen kann. Die beiden Einlassventile 7a und 7b sind stromlos offen. Der Bremskraftverstärker 13 mit dem Bremszylinder 9 ist mit dem Steuergerät 20 verbunden, welches daneben auch Signale eines Drucksensors 18 empfängt, mit dem der hydraulische Druck in Bremszylinder 9 gemessen werden kann.

Ein stromlos geschlossenes Auslassventil 8a bzw. 8b verbindet die Bremssättel 2a bzw. 2b mit einem Niederdruckspeicher 14, der seinerseits mit einer Hydraulikpumpe 3 ansaugseitig verbunden ist und über ein Umschaltventil 6 mit dem Hauptbremszylinder 9 verbunden werden kann. Die Hydraulikpumpe 3 ist für die Bremssättel 2a und 2b vorgesehen, um im Falle eines Bremsdruckabbaus z.B. durch eine Bremsschlupfregelung das bei einem Druckabbau in den Niederdruckspeicher 14 verschobene Bremsmedium wieder heraus zu fördern. Weiterhin ermöglicht Hydraulikpumpe 3 einen autonomen Druckaufbau z.B. während einer Fahrdynamikregelung. Bei einem Zuspannen der elektrischen Feststellbremse an den hinteren Rädern 12 kann auch ein zusätzlicher hydraulischer Bremsdruck aufgebaut werden, mit dem der Bremskolben des Bremsaktuators 2c beaufschlagt wird.

Die Hydraulikpumpe 3 wird durch einen Elektromotor 4 angetrieben, der seinerseits von dem Steuergerät 20 pulsweitenmoduliert (PWM) angesteuert wird. Bei Aktivierung des Elektromotors 4 kann Hydraulikpumpe 3 durch ansaugseitiges Ansaugen von Bremsflüssigkeit einen Bremsdruck auf der Hochdruckseite aufbauen. Für einen autonomen Druckaufbau wird Umschaltventil 6 geöffnet und Trennventil 15 geschlossen. Der Druck in den Radbremsen 2a, 2b kann anhand eines Druckmodells geschätzt werden oder alternativ durch nicht gezeigte Drucksensoren an den Radbremsen gemessen werden. Sobald der gewünschte Druck anliegt, den das Steuergerät z.B. anhand einer ermittelten Fahrzeugneigung und/oder einer geschätzten Fahrzeugbeladung bestimmt, wird die Ansteuerung des Elektromotors beendet. Durch das geschlossene Trennventil 15 oder ein Schließen der Einlassventile 7a, 7b wird der Bremsdruck eingesperrt, wodurch das Fahrzeug für eine (durch eventuelle Leckagen des Bremskreises begrenzte) Zeit gehalten werden kann.

Somit weist ein zur Durchführung des erfindungsgemäßen Verfahrens geeignetes Bremssystem bevorzugt eine hydraulische Betriebsbremse an allen Rädern und eine elektrische Feststellbremse an einem Teil der Räder auf. Insbesondere weist die hydraulische Betriebsbremse eine diagonale Aufteilung der Bremskreise, wonach also z.B. rechtes Vorderrad und linkes Hinterrad über einen Bremskreis betätigt werden, und eine integrierte Parkbremse an den Hinterrädern auf.

Wird das Fahrzeug durch Aktivierung der Haltefunktion und einen autonomen Druckaufbau in der Betriebsbremse z.B. an einer Steigung gegen Wegrollen gesichert, und es vergeht eine vorgegebene Zeit ohne Weiterfahrt, so erfolgt eine Übergabe von der Betriebsbremse an die elektrische Feststellbremse. Eine Übergabe kann auch stattfinden, wenn eine der Aktivierungsbedingungen der jeweiligen hydraulischen Haltefunktion nicht mehr gegeben ist, z.B. weil der Fahrer seinen Gurt gelöst und/oder die Zündung deaktiviert hat. Selbstverständlich kann man dies auch als Erfüllung einer Übergabebedingung ansehen.

Während der Übergabe wird der Druck in der hydraulischen Betriebsbremse nach dem Stand der Technik auf einem bestimmten Druckniveau gehalten, während die elektrische Feststellbremse zugespannt wird. Bei der integrierten Parkbremse wirkt dabei die Kraft der elektrischen Feststellbremse auf dasselbe Zuspannelement wie die hydraulische Betriebsbremse. Das Zuspannelement wird daher näher auf die Bremsscheibe zubewegt, wodurch sich das Volumen des verbundenen hydraulischen Bremszylinders vergrößert. Diese Volumenzunahme verursacht einen entsprechenden Druckabfall im Bremskreis.

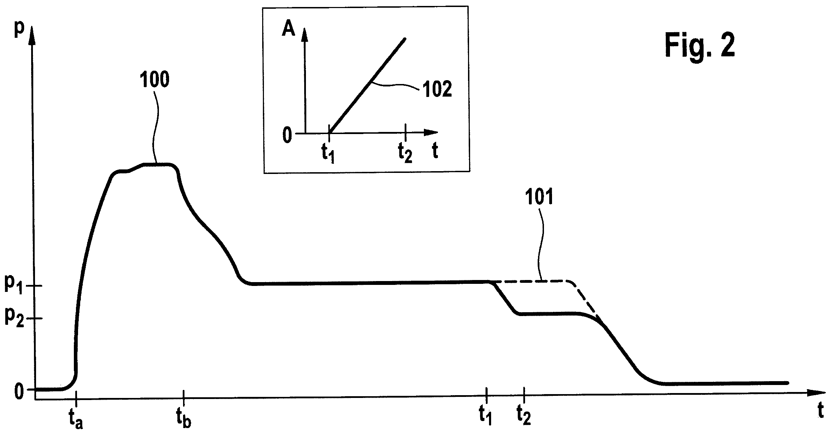

In Fig. 2 ist ein Diagramm des Drucks in einem hydraulischen Bremskreis gezeigt, wobei die Ordinate den Druck p und die Abszisse eine relative Zeit t angibt. Das Fahrzeug wird abgebremst und die Haltefunktion bzw. ein aktives Halten des Fahrzeugs durch die hydraulische Betriebsbremse wird aktiviert. Linie 100 zeigt den Verlauf des Drucks nach dem Stand der Technik. Ab dem Zeitpunkt tₐ wird das Fahrzeug abgebremst, dann wird ab dem Zeitpunkt t_{b} ein steigungsabhängiger Druck p₁ (z.B. 40 bar) für das Halten des Fahrzeugs eingestellt. Zum Zeitpunkt t₁ erfolgt (z.B. weil der Fahrer die Tür öffnet) eine Übergabe zwischen Betriebsbremse und elektrischer Feststellbremse. Während des Zuspannens der elektrischen Feststellbremse vergrößert sich aufgrund der Rückwirkung durch das gemeinsame Zuspannelement das Volumen des Bremskreises, wodurch der hydraulische Druck abnimmt, und zum Zeitpunkt t₂ ein niedrigeres Druckniveau p₂ (z.B. 25 bar) erreicht. Nach erfolgtem Festspannen der integrierten Parkbremse (bzw. der elektrischen Feststellbremse) wird die hydraulische Haltefunktion deaktiviert, der Bremsdruck sinkt nahezu auf Null ab.

Der von der Haltefunktion eingestellte hydraulische Druck p₁ ist dazu geeignet, das Fahrzeug an der vorliegenden Steigung am Wegrollen zu hindern, wohingegen der verringerte Druck p₂ häufig nicht mehr für ein sicheres Halten des Fahrzeugs ausreicht. Das Zuspannen der elektrischen Feststellbremse stellt an den Rädern der Hinterachse eine zusätzliche Bremswirkung bereit, wodurch das Fahrzeug weiterhin gesichert ist. An den Rädern der Vorderachse nimmt aufgrund der diagonalen Aufteilung der Bremskreise ebenfalls der Bremsdruck ab, woraufhin ein "Setzen" des Fahrzeugs stattfindet. Die langsame Druckabnahme in den Vorderradbremsen führt zu einem teilweisen Lösen der Bremsbeläge, und aufgrund einer Relativbewegung zwischen Bremsscheiben und Bremsbelägen entstehen störende knarzende Geräusche.

Die Dauer der Druckabnahme ist durch die Spanngeschwindigkeit der integrierten Parkbremse gegeben, und kann somit nur mit einem hohen konstruktiven Aufwand geändert werden. Eine Möglichkeit, dieses "Setzen" des Fahrzeugs zu vermeiden, besteht darin, die hydraulische Haltefunktion mit einem höheren Bremsdruck zu realisieren. Nachteilhafterweise verlangsamt dies die Geschwindigkeit des Lösens der Haltefunktion, was bei einer Anfahrt am Berg vom Fahrer als Komforteinbuße wahrgenommen würde.

Daher wird im erfindungsgemäßen Verfahren die Druckabnahme während der Übergabe durch einen zusätzlichen autonomen Druckaufbau in der hydraulischen Betriebsbremse kompensiert, womit sich der Druckverlauf von Linie 101 ergibt. Somit bleibt der hydraulische Haltedruck immer auf dem für sicheres Halten erforderlichen Wert, und ein "Setzen" des Fahrzeugs mit knarzenden Geräuschen unterbleibt.

Dies wird gemäß einem ersten Ausführungsbeispiel der Erfindung, das in der Box in Fig. 2 gezeigt ist, dadurch erreicht, dass eine zusätzliche Druckanforderung A gemäß Linie 102 stattfindet. Somit erfolgt ein zusätzlicher Druckaufbau mit einer konstanten Rate, welcher die Druckabnahme kompensiert. Bevorzugt wird die Rate des Druckaufbaus durch die pulsweitenmodulierte Ansteuerung eines elektrischen Motors einer Hydraulikpumpe gesteuert. Der Gradient des Druckaufbaus ist hierbei zweckmäßigerweise durch das Spannverhalten der elektrischen Feststellbremse und den hydraulischen Bremsdruck zum Zeitpunkt der Übergabe bestimmt.

Gemäß einem zweiten Ausführungsbeispiel erfolgt der Druckaufbau zunächst mit einer ersten konstanten Rate und nach Ablauf einer vorgegebenen Zeitdauer mit einer zweiten konstanten Rate, um verbleibende Druckschwankungen noch weiter zu vermindern.

Um den Druckabbau durch die Volumenzunahme des Bremskreises während des Spannens der elektrischen Feststellbremse möglichst exakt nachzubilden, kann der Druckaufbau auch gemäß einer beliebigen mathematischen Funktion oder einer Tabelle mit Wertepaaren angefordert werden.

Es ist vorteilhaft, wenn die Haltefunktion durch ein Steuergerät eines Bremssystems ausgeführt wird, welches außerdem eine Schlupfregelung und eine Fahrdynamikregelung bereitstellt und Zuspannanforderungen an eine elektrische Feststellbremse ausgeben kann. Besonders bevorzugt erfolgt auch eine Ausgabe von Statusmeldungen der elektrischen Feststellbremse an dieses Steuergerät. Somit kann die Übergabe auch unterbleiben oder abgebrochen werden, wenn eine Funktionsstörung der elektrischen Feststellbremse vorliegt. Indem die Raddrehzahlsensoren einer Schlupfregelung ausgewertet werden, kann der Zeitpunkt t₁, an dem eine zusätzliche Druckanforderung erfolgen muss, auch ohne Vorhandensein eines Drucksensors erkannt werden.

Dadurch, dass der Druckabfall aufgrund der Volumenzunahme in dem oder den Bremskreisen durch den zeitgleichen autonomen Aufbau hydraulischen Drucks kompensiert wird, ergibt sich ein gesteigerter Komfort bei der Verwendung einer Haltefunktion.

## Patentansprüche

1. Verfahren, bei dem ein Fahrzeug mit einer Betriebsbremse und einer Feststellbremse durch autonome Bremsbetätigung gehalten wird, wobei in einem ersten Schritt eine Betätigung der Betriebsbremse erfolgt und bei Erfüllung einer vorgegebenen Bedingung eine Übergabe von der Betriebsbremse an die Feststellbremse stattfindet, wobei während der Übergabe sowohl eine Betätigung der Feststellbremse als auch eine zusätzliche Betätigung der Betriebsbremse erfolgt, **dadurch gekennzeichnet, dass** die zusätzliche Betätigung der Betriebsbremse einen vorgegebenen zeitlichen Verlauf hat.

2. Verfahren nach Anspruch 1, **dadurch gekennzeichnet, dass** die zusätzliche Betätigung der Betriebsbremse, insbesondere ein weiterer autonomer Druckaufbau, zumindest teilweise gleichzeitig mit der Betätigung der Feststellbremse erfolgt.

3. Verfahren nach Anspruch 1 oder 2, **dadurch gekennzeichnet, dass** der vorgegebene zeitliche Verlauf gemäß einer mathematischen Funktion oder einer vorgegebenen Wertetabelle eingestellt wird.

4. Verfahren nach einem der Ansprüche 1 bis 3, **dadurch gekennzeichnet, dass** die zusätzliche Betätigung der Betriebsbremse mindestens einen Zeitraum umfasst, in dem die Bremskraft mit einer konstanten Rate zunimmt.

5. Verfahren nach Anspruch 4, **dadurch gekennzeichnet, dass** in einem ersten Zeitraum die Bremskraft mit einer ersten Rate zunimmt und in einem zweiten Zeitraum die Bremskraft mit einer zweiten Rate zunimmt.

6. Verfahren nach Anspruch 4 oder 5, **dadurch gekennzeichnet, dass** mindestens eine Rate in Abhängigkeit von der Betätigungsgeschwindigkeit der Feststellbremse und/oder der vor der Übergabe anliegenden Bremskraft gewählt wird.

7. Verfahren nach mindestens einem der vorhergehenden Ansprüche, **dadurch gekennzeichnet, dass** die zusätzliche Betätigung der Bremskraft so vorgenommen wird, dass die Gesamtbremskraft während der Übergabe von der Betriebsbremse an die Feststellbremse im Rahmen einer vorgegebenen Genauigkeit konstant gehalten wird.

8. Verfahren nach einem der vorhergehenden Ansprüche, **dadurch gekennzeichnet, dass** während der Übergabe von der Betriebsbremse an die Feststellbremse eine Überprüfung erfolgt, ob sich das Fahrzeug und/oder eines oder mehrere oder alle Räder weiterhin im Stillstand befindet.

9. Verfahren nach Anspruch 8, **dadurch gekennzeichnet, dass** die Überprüfung des Stillstands mit Hilfe mindestens eines Raddrehzahlsensors stattfindet, insbesondere an einem nur von der Betriebsbremse gebremsten Rad, wobei insbesondere die zusätzliche Betätigung der Betriebsbremse dann erfolgt, wenn mindestens eine Signalflanke eines Raddrehzahlsensors erkannt wird.

10. Verfahren nach einem der vorhergehenden Ansprüche, **dadurch gekennzeichnet, dass** die vorgegebene Bedingung für die Übergabe von der Betriebsbremse an die Feststellbremse erfüllt ist, sobald eine Deaktivierung der Motorzündung und/oder ein Lösen mindestens eines Sicherheitsgurtes und/oder ein Öffnen mindestens einer Tür und/oder ein Ablaufen eines vorgegebenen Zeitraums erkannt wird.

11. Verfahren nach einem der vorhergehenden Ansprüche, **dadurch gekennzeichnet, dass** die Bremskraft der Betriebsbremse und/oder der Feststellbremse in Abhängigkeit von einer Fahrzeugneigung und/oder einem Beladungszustand gewählt wird.

12. Bremssystem für ein Fahrzeug mit einer Betriebsbremse, welche eine fahrerunabhängige Bremsbetätigung erlaubt, und einer elektrisch ansteuerbaren Feststellbremse, **dadurch gekennzeichnet, dass** dieses ein Steuergerät ausgelegt zur Durchführung des Verfahrens nach mindestens einem der vorhergehenden Ansprüche aufweist.

13. Bremssystem nach Anspruch 12, **dadurch gekennzeichnet, dass** Feststellbremse und Betriebsbremse an mindestens einem Rad des Fahrzeugs auf dasselbe oder dieselben einem Rad zugeordneten Zuspannelemente von Radbremsen wirken.

14. Bremssystem nach Anspruch 12 oder 13, **dadurch gekennzeichnet, dass** die Betriebsbremse mindestens einen hydraulischen Bremskreis besitzt, welcher hydraulisch betätigte Reibbremsen an mindestens zwei Rädern des Fahrzeugs umfasst und dass mindestens ein Rad des Fahrzeugs nur von der Betriebsbremse gebremst werden kann.

15. Bremssystem nach Anspruch 14, **dadurch gekennzeichnet, dass** während der Übergabe von der Betriebsbremse an die Feststellbremse ein autonomer Druckaufbau in mindestens einem hydraulischen Bremskreis der Betriebsbremse erfolgt, der insbesondere so gesteuert und/oder geregelt wird, dass der Druck in dem mindestens einen hydraulischen Bremskreis im Rahmen einer vorgegebenen Genauigkeit konstant gehalten wird.

## Claims

1. Method in which a vehicle having a service brake and a parking brake is held by autonomous brake actuation, wherein, in a first step, an actuation of the service brake is performed, and, in the event of a predefined condition being met, a transfer from the service brake to the parking brake takes place, wherein, during the transfer, both an actuation of the parking brake and also an additional actuation of the service brake take place, **characterized in that** the additional actuation of the service brake has a predefined profile with respect to time.

2. Method according to Claim 1, **characterized in that** the additional actuation of the service brake, in particular a further autonomous pressure build-up, takes place at least partially at the same time as the actuation of the parking brake.

3. Method according to Claim 1 or 2, **characterized in that** the predefined profile with respect to time is set in accordance with a mathematical function or a predefined value table.

4. Method according to one of Claims 1 to 3, **characterized in that** the additional actuation of the service brake encompasses at least one time period in which the braking force increases at a constant rate.

5. Method according to Claim 4, **characterized in that**, in a first time period, the braking force increases at a first rate, and, in a second time period, the braking force increases at a second rate.

6. Method according to Claim 4 or 5, **characterized in that** at least one rate is selected as a function of the speed of actuation of the parking brake and/or as a function of the braking force acting before the transfer.

7. Method according to at least one of the preceding claims, **characterized in that** the additional actuation of the braking force is performed such that, during the transfer from the service brake to the parking brake, the total braking force is held constant within a predefined degree of accuracy.

8. Method according to one of the preceding claims, **characterized in that**, during the transfer from the service brake to the parking brake, a check is performed as to whether the vehicle and/or one or more or all of the wheels remain at a standstill.

9. Method according to Claim 8, **characterized in that** the standstill check takes place with the aid of at least one wheel rotational speed sensor, in particular at a wheel braked only by the service brake, wherein in particular the additional actuation of the service brake takes place when at least one signal flank of a wheel rotational speed sensor is detected.

10. Method according to one of the preceding claims, **characterized in that** the predefined condition for the transfer from the service brake to the parking brake is met if a deactivation of the engine ignition and/or a release of at least one safety belt and/or an opening of at least one door and/or an expiry of a predefined time period is detected.

11. Method according to one of the preceding claims, **characterized in that** the braking force of the service brake and/or of the parking brake is selected as a function of a vehicle inclination and/or a loading state.

12. Brake system for a vehicle, having a service brake which permits a driver-independent brake actuation and having an electrically actuable parking brake, **characterized in that** said brake system has a control unit designed for carrying out the method according to at least one of the preceding claims.

13. Brake system according to Claim 12, **characterized in that** the parking brake and service brake at at least one wheel of the vehicle act on the same brake-application element or element(s), which is/are assigned to a wheel, of wheel brakes.

14. Brake system according to Claim 12 or 13, **characterized in that** the service brake has at least one hydraulic brake circuit which comprises hydraulically actuated friction brakes at at least two wheels of the vehicle, and **in that** at least one wheel of the vehicle can be braked only by the service brake.

15. Brake system according to Claim 14, **characterized in that**, during the transfer from the service brake to the parking brake, an autonomous pressure build-up takes place in at least one hydraulic brake circuit of the service brake, said autonomous pressure build-up in particular being controlled and/or regulated such that the pressure in the at least one hydraulic brake circuit is held constant within a predefined degree of accuracy.

## Revendications

1. Procédé dans lequel un véhicule comportant un frein de service et un frein de stationnement est maintenu par un actionnement de freinage autonome, dans une première étape un actionnement de frein de service étant effectué et, lorsqu'une condition prédéterminée est remplie, un transfert du frein de service au frein de stationnement étant effectué, un actionnement du frein de stationnement et un actionnement supplémentaire du frein de service étant effectués pendant le transfert, **caractérisé en ce que** l'actionnement supplémentaire du frein de service présente une variation dans le temps prédéterminée.

2. Procédé selon la revendication 1, **caractérisé en ce que** l'actionnement supplémentaire du frein de service, en particulier une accumulation de pression autonome supplémentaire, est effectué au moins en partie simultanément avec l'actionnement du frein de stationnement.

3. Procédé selon la revendication 1 ou 2, **caractérisé en ce que** la variation dans le temps prédéterminée est définie selon une fonction mathématique ou une table de valeurs prédéterminée.

4. Procédé selon l'une quelconque des revendications 1 à 3, **caractérisé en ce que** l'actionnement supplémentaire du frein de service comporte au moins une période au cours de laquelle la force de freinage augmente à vitesse constante.

5. Procédé selon la revendication 4, **caractérisé en ce que**, dans une première période, la force de freinage augmente à un premier taux et, dans une deuxième période, la force de freinage augmente à un deuxième taux.

6. Procédé selon la revendication 4 ou 5, **caractérisé en ce qu'**au moins un taux est choisi en fonction de la vitesse d'actionnement du frein de stationnement et/ou de la force de freinage appliquée avant le transfert.

7. Procédé selon l'une au moins des revendications précédentes, **caractérisé en ce que** l'actionnement supplémentaire de la force de freinage est effectué de sorte que la force de freinage totale soit maintenue constante avec une précision donnée pendant le transfert du frein de service au frein de stationnement.

8. Procédé selon l'une des revendications précédentes, **caractérisé en ce que**, lors du transfert du frein de service au frein de stationnement, on vérifie si le véhicule et/ou au moins une roue ou toutes les roues sont encore à l'arrêt.

9. Procédé selon la revendication 8, **caractérisé en ce que** la vérification de l'arrêt est effectuée à l'aide d'au moins un capteur de vitesse de roue, en particulier au niveau d'une roue freinée unique par le frein de service, en particulier l'actionnement supplémentaire du frein de service étant effectué seulement lorsqu'au moins un front de signal d'un capteur de vitesse de roue est détecté.

10. Procédé selon l'une des revendications précédentes, **caractérisé en ce que** la condition prédéterminée pour le transfert du frein de service au frein de stationnement est remplie dès qu'une désactivation de l'allumage du moteur et/ou un détachement d'au moins une ceinture de sécurité et/ou l'ouverture d'au moins une porte et/ou l'écoulement d'une période prédéterminée est détectée.

11. Procédé selon l'une des revendications précédentes, **caractérisé en ce que** la force de freinage du frein de service et/ou du frein de stationnement est choisie en fonction de l'inclinaison du véhicule et/ou de l'état de chargement.

12. Système de freinage d'un véhicule comprenant un frein de service qui permet un actionnement de frein indépendant du conducteur, et un frein de stationnement à commande électrique, **caractérisé en ce qu'**il comporte une unité de commande conçue pour mettre en œuvre le procédé selon l'une au moins des revendications précédentes.

13. Système de freinage selon la revendication 12, **caractérisé en ce que** le frein de stationnement et le frein de service au niveau d'au moins une roue du véhicule agissent sur cette roue ou sur des éléments d'application de frein de freins de roue qui sont associés à cette roue.

14. Système de freinage selon la revendication 12 ou 13, **caractérisé en ce que** le frein de service comporte au moins un circuit de freinage hydraulique qui comprend des freins à friction à commande hydraulique au niveau d'au moins deux roues du véhicule et **en ce qu'**au moins une roue du véhicule ne peut être freinée que par le frein de service.

15. Système de freinage selon la revendication 14, **caractérisé en ce que**, lors du transfert du frein de service au frein de stationnement, une accumulation de pression autonome est effectuée dans au moins un circuit de freinage hydraulique du frein de service qui est notamment commandé et/ou régulé de telle sorte que la pression dans l'au moins un circuit de freinage hydraulique est maintenue constante dans le cadre d'une précision donnée.
